# EUROPEAN PATENT APPLICATION

(11) **EP 4 442 338 A1**
(43) Date of publication of application: **09.10.2024**
(21) Application number: 24163292.6
(22) Date of filing: 13.03.2024
(51) Int. Cl.: A63F 13/46, A63F 13/79, A63F 13/798

(54) **APPARATUS AND METHODS FOR VIDEO GAMES**

(30) Priority: 29.03.2023 GB 202304608
(71) Applicant: Sony Interactive Entertainment Inc., Tokyo 108-0075 (JP)
(72) Inventor: HUME, Oliver, London, W1F 7LP (GB); GUPTA, Rajeev, London, W1F 7LP (GB); MILLSON, Jason Craig, London, W1F 7LP (GB); MULLIGAN, Paul Terence, London, W1F 7LP (GB)
(74) Representative: D Young & Co LLP

(57) **Abstract**

A data processing apparatus comprises storage circuitry to store achievement data specifying one or more target properties to be achieved for a video game and progress data, the progress data being indicative of a combined user progress with respect to one or more of the target properties and a plurality of individual user progresses, wherein each of the plurality of individual user progresses corresponds to a progress of a respective user and the combined user progress corresponds to a combination of the plurality of individual user progresses, update circuitry to update the progress data in response to game session data for respective game sessions of the video game by respective users, and control circuitry, wherein in response to the combined user progress being indicative of meeting or exceeding one or more of the target properties, the control circuitry is configured to associate indicator data with at least some of the respective users for which the individual user progress contributes to the combined user progress.

## Description

### Field of the Disclosure

The present disclosure relates to the field of processing data, and more particularly to processing video images. In particular, the present disclosure relates to apparatus, systems and methods for generating composite video images.

### Background

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Video games often include achievements defining one or more conditions to be achieved by a user. Completion of such an achievement by a user can result in that user being awarded with a so-called trophy or other similar reward which can then be associated with that user for generally indicating achievements that have been completed by that user. Such achievements are typically provided for a video game title solely with the aim of extending longevity of a given video game title by providing incentives for the user to complete various achievements.

It is in this context that the present disclosure arises.

### Summary

Various aspects and features of the present invention are defined in the appended claims and within the text of the accompanying description.

### Brief Description of the Drawings

The present technique will be described further, by way of example only, with reference to embodiments thereof as illustrated in the accompanying drawings, in which:
Figure 1 is a schematic diagram illustrating an example of an entertainment device;
Figure 2 is a schematic diagram illustrating a data processing apparatus;
Figure 3 is a schematic diagram illustrating a system; and
Figures 4-6 are schematic flowcharts illustrating methods.

Embodiments of the invention will now be described, by way of example only, with reference to the accompanying drawings, in which:

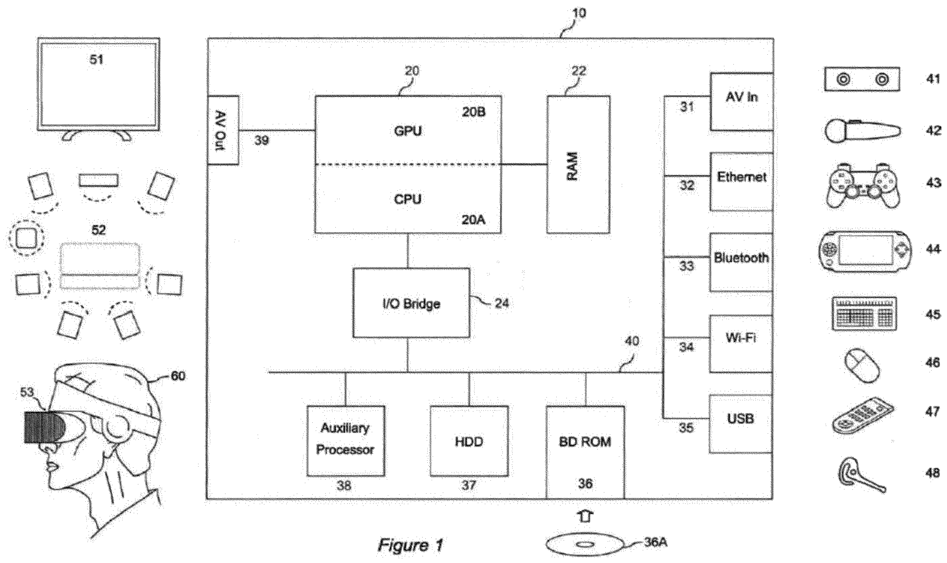

Figure 1 schematically illustrates an example entertainment device such as the Sony^{®} PlayStation 4^{®} entertainment device. A system unit 10 is provided, with various peripheral devices connectable to the system unit.

The system unit 10 comprises an accelerated processing unit (APU) 20 being a single chip that in turn comprises a central processing unit (CPU) 20A and a graphics processing unit (GPU) 20B. The APU 20 has access to a random access memory (RAM) unit 22.

The APU 20 communicates with a bus 40, optionally via an I/O bridge 24, which may be a discreet component or part of the APU 20.

Connected to the bus 40 are data storage components such as a hard disk drive 37, and a Blu-ray ^{®} drive 36 operable to access data on compatible optical discs 36A. Additionally the RAM unit 22 may communicate with the bus 40.

Optionally also connected to the bus 40 is an auxiliary processor 38. The auxiliary processor 38 may be provided to run or support the operating system.

The system unit 10 communicates with peripheral devices as appropriate via an audio/visual input port 31, an Ethernet ^{®} port 32, a Bluetooth ^{®} wireless link 33, a Wi-Fi ^{®} wireless link 34, or one or more universal serial bus (USB) ports 35. Audio and video may be output via an AV output 39, such as an HDMI port.

The peripheral devices may include a monoscopic or stereoscopic video camera 41 such as the PlayStation Eye ^{®}; wand-style videogame controllers 42 such as the PlayStation Move ^{®} and conventional handheld videogame controllers 43 such as the DualShock 4 ^{®} or DualSense ^{®}; portable entertainment devices 44 such as the PlayStation Portable ^{®} and PlayStation Vita ^{®}; a keyboard 45 and/or a mouse 46; a media controller 47, for example in the form of a remote control; and a headset 48. Other peripheral devices may similarly be considered such as a printer, or a 3D printer (not shown).

The GPU 20B, optionally in conjunction with the CPU 20A, processes data and generates video images (image data) and optionally audio for output via the AV output 39. Optionally, the audio may be generated in conjunction with or instead by an audio processor (not shown).

The video and optionally the audio may be presented to a television 51. Where supported by the television, the video may be stereoscopic. The audio may be presented to a home cinema system 52 in one of a number of formats such as stereo, 5.1 surround sound or 7.1 surround sound. Video and audio may likewise be presented to a head mounted display unit 53 worn by a user 60.

In operation, the entertainment device defaults to an operating system such as a variant of FreeBSD 9.0. The operating system may run on the CPU 20A, the auxiliary processor 38, or a mixture of the two. The operating system provides the user with a graphical user interface such as the PlayStation Dynamic Menu. The menu allows the user to access operating system features and to select games and optionally other content.

Figure 1 therefore provides an example of an entertainment device suitable for performing processing for executing a session of a video game and generating video images and audio for output to a user. The entertainment device may for example generate images for display by a display device such as the television 51 and/or the head mounted display unit 53.

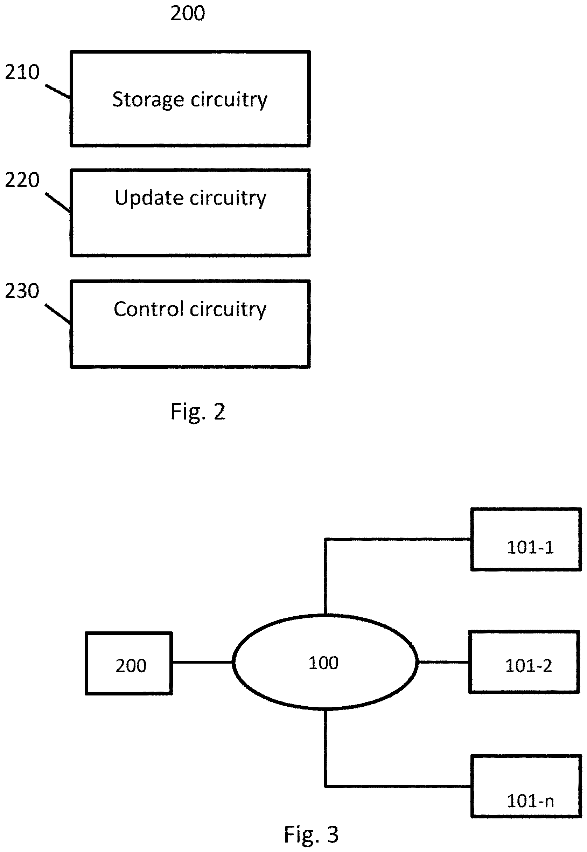

Figure 2 schematically illustrates a data processing apparatus 200 in accordance with embodiments of the disclosure. The data processing apparatus 200 comprises storage circuitry 210, update circuitry 220 and control circuitry 230. The data processing apparatus 200 may in some cases be provided as part of a server device, such as a server associated with a gaming platform and/or a server associated with a cloud gaming service.

The storage circuitry 210 is configured to store achievement data for a video game. The achievement data specifies one or more target properties to be achieved for the video game. The achievement data may in some examples specify a single target property. In other examples, the achievement data may specify a plurality of target properties. For example, a target property may correspond to a target period of time for which the video game is to be played. As another example, a target property may correspond to a number of points (or credits) accumulated during gameplay of the video game. Examples of possible target properties will be discussed in more detail later. More generally, the achievement data specifies at least one target property associated with the video game which is indicative of a target to be achieved based on gameplay of the video game.

In the following discussion, the techniques of the disclosure will be discussed with respect to a respective instance of achievement data. However, in some examples the storage circuitry 210 stores first achievement data specifying one or more first target properties for the video game and second achievement data specifying one or more second target properties for the video game so as to specify two achievements. Hence, the first achievement data may specify one or more target properties for specifying a first achievement to be fulfilled based on gameplay of the video game and the second achievement data may specify one or more target properties for specifying a second achievement to be fulfilled based on gameplay of the video game. The storage circuitry 210 may store one or more instances of achievement data for one or more different video games. For example, the data processing apparatus 200 may be provided as part of a server associated with a number of different video games and may store achievement data for various different video games.

The storage circuitry 210 is configured to store progress data for monitoring progress for the achievement data. The progress data is indicative of a combined user progress and a plurality of individual user progresses for monitoring progress for the achievement data.

The plurality of individual user progresses each correspond to a progress of a respective user for the achievement data. The plurality of individual user progresses may for example comprise a first individual user progress which is indicative of a progress achieved by a first user for the achievement data and also comprise a second individual user progress which is indicative of a progress achieved by a second user for the achievement data. The number of respective individual user progresses included in the stored progress data is not particularly limited and in some cases may be of the order of tens, hundreds of even thousands. In particular, the video game may correspond to a single player or multiplayer video game which can be played by various users, and respective individual user progresses can be stored for the achievement data for tracking the progress of each user with respect to the achievement data.

More generally, progress data indicative of a plurality of individual user progress can be stored, in which each individual user progress tracks a progress of a respective user for the achievement data. The combined user progress corresponds to a combination of the plurality of individual user progresses. Hence, whereas each individual user progress represents a contribution provided by a respective user, the combined user progress represents a combined progress for the plurality of individual user progresses.

For example, the achievement data may specify a target property such as a number of successful completions of a specific in-game objective (e.g. a number of times a specific task, such as defeating an enemy in the video game, is to be completed). During gameplay over one or more sessions, a first user may complete the in-game objective N times. A second user may complete the in-game objective M times. The progress data can be stored and maintained so that an individual user progress associated with the first user indicates that the first user has completed the in-game objective N times, and an individual user progress associated with the second user indicates that the second user has completed the in-game objective M times. The individual user progresses can each track a progress of a respective user. The combined user progress can be stored and maintained so that the combined user progress corresponds to a combined progress of the first and second user (and any further users that may have contributed). Hence, in this example the combined user progress may indicate that the in-game objective has been completed N+M (and optionally further contributions from other users) times. This represents an example in which the combined user progress comprises a cumulative value that can be incremented according to contributions from a number of different users based on their gameplay.

Hence more generally, the storage circuitry 210 stores the achievement data and also stores the progress data for the achievement data, in which the progress data is indicative of a plurality of individual user progresses that have provided a contribution with respect to one or more of the target properties for the achievement data and is also indicative of a combined user progress obtained by combining the plurality of individual user progresses.

The update circuitry 220 is configured to update the progress data in response to game session data for respective game sessions of the video game by respective users. The data processing apparatus 200 receives game session data for respective game sessions of the video game by respective users and updates the progress data accordingly so that the progress data tracks the individual contributions of the respective users and also tracks the combined progress.

For example, when playing a session of the video game (e.g. a locally executed game session executed by a device such as that in Figure 1 or a cloud executed game session), a user can progress the session through various user inputs. During and/or after the session, game session data for that session can be communicated to and received by the data processing apparatus 200. The received game session data can be thus be used to update the progress data by updating the individual user progress associated with that user and also by updating the combined user progress.

In some examples, the received game session data may be used to apply an update to the progress data by updating the individual user progress associated with that user, and the combined user progress may be updated responsive to changes to the individual user progress(es). Hence more generally, the update circuitry is configured to update the progress data by updating the individual user progresses and also updating the combined user progress to keep track of progress with respect to the achievement data.

In some embodiments of the disclosure, the combined user progress comprises at least one cumulative value, and the update circuitry 220 is configured to update the cumulative value in dependence on the plurality of individual user progresses. The plurality of individual user progresses can be updated responsive to the game session data for the respective game sessions so that the plurality of individual user progresses each track progress for a respective user, and the cumulative value can be updated in dependence on the plurality of individual user progresses. The cumulative value may thus in some examples represent a running total indicative of the collective progress of the users for the achievement.

Figure 3 schematically illustrates an example of a system comprising the data processing apparatus 200. The system comprises the data processing apparatus 200 which communicates with the client devices 101-1, 101-2 ... 101-n via the network 100 (e.g. the internet). Whilst this example shows three client devices, the number of client devices is not particularly limited and there may be any suitable number of client devices (n may take any suitable value in Figure 3 and there may be any suitable number of client devices).

In example of Figure 3, the data processing apparatus 200 may for example be a server apparatus. The data processing apparatus 200 may receive game session data from the client devices 101-1, 101-2 ... 101-n via the network 100. This represents an example in which video games executed locally by the client devices generate game session data which is communicated to the data processing apparatus 200 via the network 100 (e.g. the internet). Alternatively or in addition, one or more video games may be executed by a gaming server (not shown in Figure 3) so that game session data generated by the gaming server is received by the data processing apparatus 200. In some examples, the data processing apparatus 200 may be provided as part of a gaming server or as part of another server used in association with a gaming server.

Whilst not shown in Figure 3, in some examples game session data from client devices may be communicated to the data processing apparatus 200 via one or more intermediate processing devices. Such intermediate processing devices may perform one or more preprocessing operations with respect to the game session data so that metadata indicative of statistics for the game session data can be associated with the game session data for use by the data processing apparatus 200. Alternatively or in addition, such processing may be performed by data processing apparatus 200 and/or the client devices.

More generally, game session data for one or more game sessions of the video game by each of a plurality of respective users can be received by the data processing apparatus 200. The storage circuitry can store and maintain the progress data to indicate an individual user progress achieved by a given user. In particular, the individual user progress achieved by the given user may represent a progress achieved over multiple game sessions that may be completed over a period of time such as hours, days, weeks or even months. For example, the data processing apparatus may receive first game session data for a first respective game session of the video game by the given user at a first time, and may receive second game session data for a second respective game session of the video game by the given user at another time. The individual user progress for the given user can be updated responsive to the first game session data to thereby track the progress that has been achieved for the first game session data, and subsequently the individual user progress for the given user can again be updated responsive to the second game session data to thereby track the progress that has been achieved for the second game session data. For example, during the first game session the given user may complete an objective X times (and this can be indicated by the game session data received for the first game session), and the individual user progress can be updated to indicate this, and during the second game session (i.e. a subsequent game session) the given user may complete the objective Y times, and the individual user progress can again be updated to indicate this.

Hence more generally, each individual user progress can be used to track the progress of a respective user with respect to one or more of the target properties specified by the achievement data and the progress can be achieved by a respective user through a number of game sessions over a period of time.

The game session data for a respective game session may in some examples be received at an end of a game session so as to indicate a summary of the progress achieved during that session. In particular, the game session data may be indicative of one or more summary statistics for the game session. Alternatively or in addition, the game session data for a respective game session may be received during a game session (e.g. at periodic intervals). Alternatively or in addition, the game session data for a respective game session may be received during a game session in response to a completion of an objective associated with the achievement data. In particular, in response to completion of an objective, game session data indicative of a completion of the objective may be received by the data processing apparatus so that the progress data can be updated during the game session.

The progress data can thus be stored and maintained to indicate progress with respect to the achievement data so that the progress data tracks contributions from a plurality of respective users and from a plurality of respective game sessions. The combined user progress can thus be updated for tracking a combined progress achieved by the combination of the individual user progresses.

In response to the combined user progress being indicative of meeting or exceeding one or more of the target properties specified by the achievement data, the control circuitry 230 is configured to associate indicator data with at least some of the respective users for which the individual user progress contributes to the combined user progress. Hence, when the progress data is updated and the update causes the combined user progress to at least meet one or more of the target properties or exceed one or more of the target properties, the control circuitry 230 associates the indicator data with at least some of the respective users that have contributed to the combined user progress. For example, a target property may correspond to completion of an objective a given number of times, and in response to the combined user progress indicating a value that at least matches or exceeds the given number, such that the combined user progress is indicative of meeting or exceeding the target property specified by the achievement data, the control circuitry 230 can associate the indicator data with at least some of the users that have contributed to the combined user progress. In some cases, the update to the combined user progress may cause the combined user progress to exactly meet a target property. For example, when the combined user progress indicates a cumulative value that is one increment smaller than a value for the target property and game session data is received that causes the combined user progress to be update to increment the cumulative value by one increment, then the combined user is indicative of meeting the target property. However, in some cases an update may be applied to the combined user progress that increments the cumulative value by an integer number of increments that is two or more such that the cumulative value is updated and exceeds the target property. For example, such a situation may arise when game session data for multiple users is applied simultaneously to update the progress data and/or if game session data representing a summary of a game session (e.g. summarising achievements from that game session) is received.

The indicator data is associated with at least some of the respective users that have contributed to the combined user progress meeting or exceeding one or more of the target properties. Association of the same indicator data with these users thereby creates an associated set of users and, as explained above, membership of the set of associated users is conditional on each user having at least contributed to the combined user progress.

The indicator data can thus be associated with a number of users responsive to the combined user progress fulfilling at least one target property for the achievement data. The indicator data may comprise various types of data, as discussed in more detail below, which can be made accessible to each of the users in the set of associated users for enabling interaction between the these users. Alternatively or in addition, the indicator data can be used to identify which users have contributed to the achievement being met and used to create trophy data, the trophy data indicating the set of users that have together achieved a group trophy for the achievement data. The trophy data can be associated with the users (e.g. with their user accounts) for indicating that they have contributed to achieving the group trophy, and as discussed in more detail later this trophy data may be shared with various other users for a number of purposes, which among others may comprise incentivising further participation by other users to attempt to gain membership to the associated set of users.

Via the indicator data that is associated with, and thus accessible, by a given user, that given user may be able to access information associated with other users that have also been associated with the indicator data and communicate and/or otherwise interact with one or more of the other users. For example, the indicator data may comprise information identifying each of the users associated with the indicator data. Therefore, a first user associated with the indicator data can access the indicator data and identify another user that is associated with the indicator data, and this can be of assistance for connecting users with each other. For example, the first user may send a message and/or a friend request to the second user who, without access to the indicator data, the first user may have not been aware of. Moreover, by creating the associated set of users in this way, each user is required to have contributed to the combined user progress, and this may assist in creating an associated set of users for which at least some of the users have an improved likelihood of having one or more common interests.

Hence more generally, the indicator data can be associated with a plurality of users that have contributed to the combined user progress and the plurality of users can thereby potentially be informed of other users that they may have had no awareness of and this may allow discovery of other users with similar interests. Further possibilities using the indicator data are discussed in more detail later, but more generally an associated set of user that are each associated via the indicator data can be established.

For example, the control circuitry 230 may associate the indicator data with a user account of a respective user, and the indicator data may comprise information associated with user accounts other users with which the indicator data has also been associated. In this way, the users can be facilitated in being connected with each other using their associated user accounts. For example such user accounts may be accounts of a gaming platform that are used by the users when playing the video game.

As explained above, the achievement data specifies one or more target properties to be achieved for a video game. A target property may be a target property to be achieved based on gameplay of the video game, and the target property may correspond to completing an in-game objective a predetermined number of times. In particular, the target property may correspond to completing an in-game objective a predetermined number of times, in which the predetermined number of times is set in advance (e.g. by a game developer or a user so as to create a user-generated achievement) to a value such that meeting or exceeding the target property by a lone user is generally considered not feasible. For example, a target property that may be expected to require hundreds or thousands of hours of game play may be specified so that respective contributions from a number of users over time can result in achievement of the target property. Alternatively or in addition, a target property may specify a certain duration of gameplay (e.g. in units of hours or days or months or years).

In some examples, a target property may correspond to completing a multi-user in-game objective a predetermined number of times. A multi-user in-game objective (e.g. a team-based objective) that is completed by two or more users playing simultaneously may be specified and a predetermined number of completions for that object may be specified as the target property. For example, an objective in a video game in which users work cooperatively to achieve a goal such as defeating a type of in-game character may be used. This can assist in incentivising collaboration between users.

More generally, the achievement data specifies one or more target properties to be achieved for the video game. In the case of the achievement data specifying a single target property then in response to the combined user progress being updated and meeting or exceeding the target property, then the control circuitry 230 associates the indicator data with at least some of the users that have contributed to the combined user progress being caused to meet or exceed the target property.

In the case of the achievement data specifying a plurality of target properties, various possibilities are considered. In some examples, in response to the combined user progress being updated and meeting or exceeding at least one target property, then the control circuitry can be configured to associate the indicator data with at least some of the users that have contributed to the combined user progress. Alternatively, in other examples only in response to the combined user progress being updated and meeting or exceeding each of the plurality of target properties, then the control circuitry can be configured to associate the indicator data. Alternatively, in other examples in response to the combined user progress being updated and meeting or exceeding a first of the plurality of target properties, then the control circuitry can be configured to associate first indicator data, and in response to the combined user progress being updated and meeting or exceeding a second of the plurality of target properties, then the control circuitry can be configured to associate second indicator data.

For example, the achievement data may specify a single target property such a period of time, so that in response to the combined user progress corresponding to a time that matches the period of time, the indicator data is associated with at least some of the users. Completion of an in-game objective a given number of times may be used in a similar manner in place of the period of time. In some examples, the achievement data may specify two target properties such as a period of time and completion of a given objective at least a predetermined number of times. In response to at least one (or both) target properties being met then the indicator data can be associated with at least some of the users. Hence more generally, a developer or user may specify two or more target properties and may specify whether fulfilment of just one or each of the target properties is to be achieved as a condition for associating the indicator data. Whilst the above examples refer to using time and completion of an objective as examples of the target property, it will be appreciated that other aspects of gameplay may be used in a similar manner, such as a number of points or credits scored in a game, e.g. a number of goals scored for a sport-based video game, a number of laps completed of a racing track (or more specifically, a number of laps completed of a racing track in under a set time). In some examples, the target property may relate to a target for which users can achieve progression towards across a video game title or the target property may relate specifically to a target for which users can achieve progression towards only for certain portions of a video game (e.g. when playing in a given portion of a virtual world and/or time specific target properties).

For example, the achievement data may specify a number of respective football matches for a video game title (such as EA Sports ^{®} FIFA), or more specifically a number of respective football matches in which a user scores at least a threshold number of goals (e.g. G goals, where G is a respective value in the range 3-10 for example) and/or wins by at least a threshold number of goals. Hence, for a game session in which the user scores at least the threshold number of goals, the individual user progress associated with that user can be updated to indicate a total number of matches for which the user has scored at least the threshold number of goals. Therefore, respective users can each attempt to play the video game and complete matches in which they score at least the threshold number of goals in order to attempt to provide progress towards the combined user progress fulfilling the achievement data. In response to the combined user progress data indicating that the collective (for the collection of users) number of matches for which at least the threshold number of goals has been scored meets the target property, then the control circuitry can associate indicator data with at least some of the users that have contributed. Hence for example, the indicator data may be associated with users that have each scored at least G goals in a match, and the indicator data can establish a community of users with potentially similar skill level (and/or also having a similar degree of interest in the given video game). As explained in more detail later, in some cases the indicator data may instead only be associated with users that have each scored at least G goals in at least a threshold number of matches, and this can be used for providing a more robust scheme for creating a selective community of users.

In some examples the achievement data may specify at least a first target property and a second target property (and optionally a third, fourth and so on). In some examples, the target properties may be used to provide a number of different communities with different skill levels. For example, the first target property may specify completion of a given objective a first predetermined number of times with at least a first quality rating and a second target property may specify completion of the given object a second predetermined number of times with at least a second quality rating, in which the first and second predetermined number of times may be different or the same, and the first and second quality rating are different. For example, the first target property may specify a number of football matches and a first threshold number of goals to be scored by a user, and the second target property may specify a number of football matches and a second threshold number of goals to be scored by a user, in which the second threshold number is greater than the first threshold number (of course the first threshold number may be a range that does not overlap with the second threshold number, so that scoring a number of goals that is greater than or equal to the second threshold number does not contribute towards the fulfilment of the first target property). Hence, in response to the combined user progress meeting or exceeding the first target property, the control circuitry can be configured to associate first indicator data with at least some of the users that have contributed to the combined user progress meeting or exceeding the first target property, similarly the control circuitry can be configured to associate second indicator data with at least some of the users that have contributed to the combined user progress meeting or exceeding the second target property. The first indicator data can therefore be used to associate users and establish a community of users that have contributed with respect to the first target property (or have contributed at least a threshold contribution with respect to the first target property, such as contributed to at least H% of the first predetermined number) and the second indicator data can be used to associate users and establish a community of users that have contributed with respect to the second target property (or have contributed at least a threshold contribution with respect to the first target property). Of course this may potentially result in a given user being associated with the first and second type of indicator data, and thus part of the two respective sets of associated users. In some examples, one of the first and second indicator data may be associated with a given user at any given time. For example, either a user may be requested to specify one of the two options, or one of the two may be associated based on a condition of which is most recent. Of course, in other examples the first and second indicator data may both be simultaneously associated with the user. Whilst the above example refers to two target properties that can be used for associating two types of indicator data, it will be appreciated that the same technique can be applied for a greater number (e.g. three or more) target properties and a multi-level scheme of communities with different skill levels can be established in this way.

More generally, a number of target properties specified by the achievement data is not particularly limited and may take a value, such as a value in the range from 1 to 10, for example.

Referring again to Figure 2, in some embodiments of the disclosure, in response to the combined user progress being indicative of meeting or exceeding one or more of the target properties, the control circuitry 230 is configured to associate the indicator data with each respective user that provides a contribution to the combined user progress. In this way, indicator data can be associated with any user that has contributed to the combined user progress.

In some embodiments of the disclosure, in response to the combined user progress being indicative of meeting or exceeding one or more of the target properties, the control circuitry 230 is configured to associate the indicator data with a respective user according to whether an individual user progress associated with that respective user provides at least a threshold contribution with respect to the combined user progress. Rather than associating the indicator data with each respective user that has provided a contribution to the combined user progress, the control circuitry 230 may instead select whether to associate the indicator data with a given user that has provided a contribution to the combined user progress depending on whether the given user has provided a contribution that is greater than or equal to a threshold contribution. The threshold contribution may be specified as a predetermined proportion of a value associated with a target property.

For example, the target property may specify that a predetermined number of completions of an in-game objective is required (e.g. a certain number of kills of a type of character in the video game). The threshold contribution may be set to a value that corresponds to a portion of the predetermined number of completions (e.g. Z%, where Z may be a value in the range 1-10 for example). Hence in this case, users may each be required to contribute at least the threshold contribution in order for the indicator data to be associated therewith. By selectively associating the indicator data this way, users can be incentivised to increase their level of participation with respect to the achievement, since only users that have contributed at least the threshold contribution may be associated with the indicator data and thus receive any networking, matchmaking, rewards or other benefits from being associated with the indicator data. In addition, this can potentially result in the respective users that are associated via the indicator data each having a minimum degree of interest for the achievement and thus an improved likelihood that the associated users have one or more common interests.

In some cases, in response to the combined user progress being indicative of meeting or exceeding one or more of the target properties, the indicator data can be associated with at least some of the respective users according to any of the techniques discussed above and this may represent completion of the achievement. For example, in response to the combined user progress indicating that the group of users have collectively completed an objective a number of times that matches a value specified by a target property then this may signify completion of the achievement. The indicator data can thus be associated with the respective users for associating those users with each other (e.g. as a community, such as by linking their associated user accounts based on the indicator data) and no further operations with respect to that achievement may be performed. For example, the indicator data may comprise trophy data for a trophy object for the video image indicating that the users have collectively achieved the trophy object. The indicator data may comprises information indicative of an identification of the users.

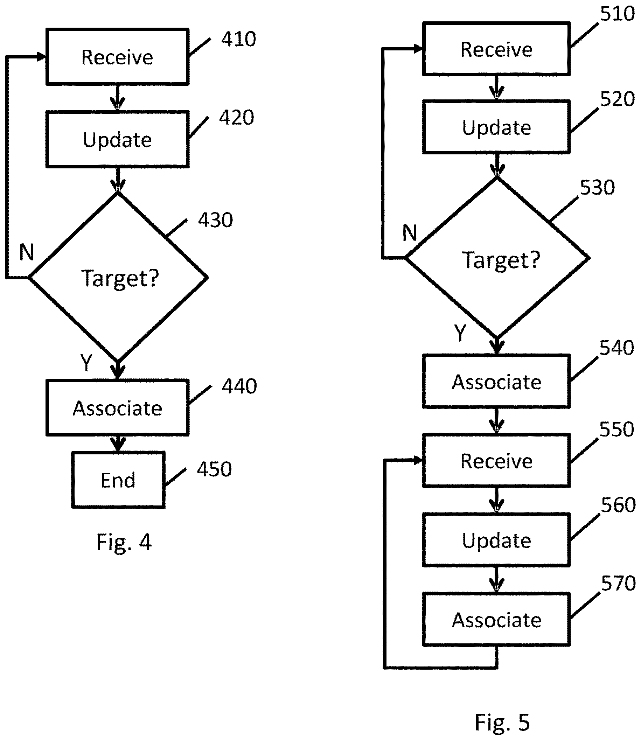

Figure 4 schematically illustrates a method. The method comprises, at step 410, receiving game session data for respective game sessions of a video game by respective users. At step 420, the method comprises updating progress data in response to the received game session data. At step 430, the method comprises determining whether a combined user progress indicates that one or more of the target properties has been at least met or exceeded. When determining at the step 430 that one or more of the target properties has been at least met or exceeded, the method proceeds to step 440 which comprises associating indicator data with at least some of the respective users for which the individual user progress contributes to the combined user progress. The method then ends at step 450. When determining at the step 430 that one or more of the target properties has not been at least met, the method returns to the step 410. Therefore, Figure 4 provides an example in which the indicator data is associated with at least some of the users at the step 440 and the method ends. The users are thus associated via the indicator data to establish an associated set of users with no further operations to remove users from, or add users to, the associated set of users.

In some embodiments of the disclosure, the update circuitry 220 is configured to continue to update the progress data in response to game session data for respective game sessions of the video game by respective users even after the combined user progress is indicative of meeting or exceeding one or more of the target properties. Therefore, even after fulfilment of the achievement by the combined user progress, the update circuitry 220 can continue to update the progress data in response to game session data for other game sessions. The updates to the progress data may be reflected in the indicator data so that the users associated with the indicator data are able to view one or more metrics (e.g. statistics) associated with the current state of the progress data. For example, a current state of the combined user progress and/or a current state of the individual user progresses may be made viewable to users via the indicator data. Hence, users may be able to understand the contributions provided by the respective users (e.g. such as viewing top contributors) and this may encourage further participation and competition between the users.

The updates to the progress data may be used so that the control circuitry can vary the association of the indicator data with the users by varying which users are associated with the indicator data. In particular, in response to the combined user progress being indicative of at least meeting or exceeding one or more of the target properties, the control circuitry can perform an initial association of the indicator data with at least some of the users, and further updates to the progress data after the initial association has been made can be used to associate the indicator data with a new user (a user not previously associated with the indicator data by the initial association) and/or remove an already associated user from being associated with the indicator data. Hence more generally, a first set of users may each be associated with the indicator data at a time of the progress data fulfilling the achievement, and a second set of users may each be associated with the indicator at a later time due to updates that have been made to the progress data after fulfilment of the achievement, in which the second set of users differs from the first set of users by having at least one of: one or more new users; and one or more of the users from the first set of users being absent from the second set of users.

In some embodiments of the disclosure, the control circuitry 230 is configured to selectively associate the indicator data with a respective user according to whether an individual user progress associated with that respective user provides at least a threshold contribution with respect to the combined user progress. As explained above, the combined user progress may continue to be updated even after the indicator data has been initially associated with the users. Even once the combined user progress is indicative of meeting or exceeding one or more of the target properties, the combined user progress can continue to be updated for subsequently received game session data, and one or more users that have previously been associated with the indicator data may be removed from being associated with the indicator data and/or one or more other users that were not previously associated with the indicator data (e.g. because at the time of the combined user progress meeting one or more of the target properties such users had not provided at least a threshold contribution) may be associated with the indicator data and thus added to the associated user group (also referred to as the associated set of users). In particular, the update circuitry can continue to update the combined user progress, and indicator data can be selectively associated with respective users according to whether their respective contribution (their individual user progress) provides at least a threshold contribution to the combined user progress, in which the threshold contribution to the combined user progress is set to a predetermined proportion of a value associated with the combined user progress. For example, the combined user progress may indicate a current value corresponding to a number of times an in-game objective has been completed, such that the value is incremented accordingly when users complete the objective. The threshold contribution to the combined user progress may be set as a predetermined proportion of the current value (e.g. a predetermined percentage of the current value). In this way, when a user's contribution matches of exceeds the threshold contribution (due to further game sessions by that user) then the control circuitry can associate the indicator data with that user to thereby add the user to the associated set of users. Conversely, when a user's contribution falls below the threshold contribution (which may arise due to lack of activity by that user and/or relatively low activity compared to higher activity of other users) then the control circuitry can remove the user from being associated with the indicator data to thereby remove the user from the associated set of users. Hence more generally, the composition of the set of users each associated with the indicator data can potentially be dynamically updated over time. In some examples, the update circuitry may be configured to continue to update the progress data as long as game session data is received. Alternatively, in other examples the update circuitry may be configured to update the progress data for a finite time period. For example, a pre-set period may be set so that eventually updates to the progress data, and thus alterations to the associated set of users, are no longer performed after expiry of the pre-set period (e.g. a pre-set expiry period of e.g. a week, a month or a year may be set in this way).

Hence more generally for at least one other respective user that is not associated with the indicator data in response to the combined user progress being indicative of meeting or exceeding one or more of the target properties, the control circuitry can be configured to associate the indicator data with the at least one other respective user in response to an individual user progress associated with that respective user subsequently being updated to provide at least the threshold contribution with respect to the combined user progress.

Figure 5 schematically illustrates a method. The method comprises steps 510, 520, 530 and 540 which are the same as the steps 410, 420, 430 and 440 discussed previously with respect to Figure 4. The method of Figure 5 differs from that of Figure 4 in that operations are performed after the step 540 to update the progress data and vary one or more users which are associated with the indicator data to add one or more new users to be associated with the indicator data and/or remove one or more users from being associated with the indicator data, as discussed previously. The method comprises, at step 550, receiving game session data for respective game sessions of the video game by respective users. At step 560, the method comprises updating the progress data in response to the game session data received at the step 550. At step 570, the method comprises varying the set of users with which the indicator is associated (i.e. changing the set of users associated with the indicator data to be different from the set of users associated with the indicator data at the step 540). After the step 570, the method returns to the step 550 and in response to receiving further game session data the steps 550 to 570 can be repeated.

In particular, at the step 570 one or more of the following steps may be performed: associating the indicator data with at least one new user that was not previously associated with the indicator data at the step 540; and removing association of the indicator data from at least one user that was previously associated with the indicator data at the step 540. In particular, at the step 570 the indicator data may be associated with a new user, or removed from being associated with a user, according to whether an individual user progress associated with that respective user currently provides at least a threshold contribution with respect to the combined user progress. In some examples, once a user has been associated with the indicator data at the step 540, the user may remain associated with the indicator data regardless of any further participation by that user. Hence, the processing at the steps 550-570 may be performed for selectively associating the indicator with one or more new users for the purpose of adding one or more new users to the associated set of users, with previous users being retained. As shown in Figure 5, after the step 570 the method returns to the step 550 and the steps 550, 560 and 570 can potentially be repeated a number of times. As explained above, a pre-set expiry period may be specified so that repeating of the steps 550, 560 and 570 can be prohibited after expiry of this period.

As mentioned above, the control circuitry 230 associates the indicator data with at least some of the respective users. A user that has been associated with the indicator data can thus be associated with another user that has been associated with the indicator data. In this way an association of users (associated set of users) can be established based on the indicator data. In some embodiments of the disclosure, the control circuitry 230 associates the indicator data with a plurality of respective users and the indicator data is indicative an identity of each of the plurality of respective users. For example, the indicator data can be associated with each of a first user and a second user, and the indicator data comprises information indicative of an identity of the first user and an identity of the second user. Moreover, the indicator data may be associated with a number of users (e.g. potentially of the order of tens, hundreds or even thousands), and the indicator data comprises information indicative of each user with which the indicator data has been associated. In this way, each user associated with the indicator data can access the indicator data to thereby identify other users that have been associated with the indicator data.

The indicator data may specify an identity of a user by specifying an ID or username associated with a user account of a user. For example, the indicator data may specify a unique identifier such as the PlayStation^{®} Online ID used for uniquely identifying user profiles on the PlayStation^{®} Network. Similarly, a gamer tag such as that used on the XBOX^{®} gaming platform may be specified by the indicator data.

More generally, the indicator data may specify a unique identifier for uniquely identifying a user account for an online social network (or more specifically an online gaming network). The unique identifier may be capable of being used with respect to a gaming platform to allow a user with knowledge of the unique identifier (via the indicator data) to send a message to the user associated with the unique identifier even when the two users are not friends on the gaming platform. Hence, by associating the indicator data with each of a plurality of users, unique identifiers for uniquely identifying each of the plurality of users can be shared with the plurality of users and users that may have otherwise been unaware of each other can be facilitated in communicating.

The indicator data may specify contact data for allowing a user to be contacted. For example, the above mentioned unique identifier may correspond to a username such that the username can be used to contact the user. Alternatively or in addition, the indicator data may specify one or more of an email address, a phone number and an online handle.

In some embodiments of the disclosure, the indicator data associated with each user comprises a link for accessing a same group chat. The indicator data may comprise one or more links, such as a web-link associated with an online group chat and/or gaming-platform link associated with a group chat (e.g. a party room) of a gaming platform. Hence, each of the plurality of users associated with the indicator data can access a same group chat (which may be a text based chat forum, an audio based chat forum in which users exchange voice based messages, and/or a combination of the two). For example, the group chat may be a forum to which the users can post messages which remain visible in the forum and users can access the forum freely at different times to post and/or view messages. In particular, by providing a link to access a same group chat, the users can potentially communicate with each other in a group-based conversation as a way of firstly becoming more familiar with one or more of the other users as opposed to one user contacting another user directly as part of a private one-to-one chat.

In some embodiments of the disclosure, the indicator data comprises contribution data indicative of a respective contribution of at least some of the plurality of respective users. The contribution data may indicate a contribution provided by a first respective user and also indicate a contribution provided by a second respective user. Hence, the indicator data can be used by each of the users associated with the indicator data to determine a contribution that has been provided by one or more of the other users. For example, the combined user progress may indicate that a given objective has been completed a given number of times, and the contribution data may indicate for one or more users how many times they have each completed the objective. The contribution data may be indicative of a respective contribution of a user as a proportion of the combined user progress. The contribution provided by a user may be indicated as an absolute number (e.g. X completions, or Y minutes played) and/or as a proportion (e.g. percentage) of a value associated with a current state of the combined user progress.

Hence, the update circuitry can update the progress data in response to game session data for respective game sessions of the video game by respective users so as to update an individual user progress associated with an individual user response to game sessions by that individual user, and the contribution data may indicate a current state of that individual user progress. The contribution data may also indicate a current state of the combined user progress.

More generally, the indicator data may comprise contribution data, which may be indicative an amount or level of contribution provided by one or more respective users so that each user associated with the indicator data can understand the contributions and this can incentivise further participation with respect to the achievement. For example, the contribution data may indicate a top N contributors (e.g. top 5 or 10 contributors) and this can encourage further participation with respect to the achievement by other users to attempt to obtain a top N ranking, whilst also potentially encouraging further participation by one or more users already having a top N ranking to attempt to improve on or retain their ranking.

In some embodiments of the disclosure, the data processing apparatus is configured to output trophy data indicative of a group of users each associated with the indicator data. As explained above, in response to the combined user progress being indicative of meeting or exceeding one or more of the target properties, the control circuitry associates the indicator data with a number of users that have at least each contributed to the combined user progress. Hence, the achievement can be considered as a group achievement that is accomplished by a group of users, and a group trophy can be awarded to each of the users with which the indicator data is associated. As explained previously, in some cases the indicator data may be associated with users according to whether their contribution is at least a threshold contribution and in such cases users that have contributed but provided a negligible contribution may not be awarded with the group trophy. In other examples, each user that has provided any contribution may be associated with the indicator data and thus can be rewarded with the group trophy.

The group trophy may indicate an identity of each of the users and also an achievement that is associated with the group trophy. For example, one or more of the target properties may be specified as part of the group trophy. Hence, the group trophy may comprise a list of users and also what the target was for achieving this group trophy. Referring to the above example using football matches, a group trophy for which a certain number of football matches are to be completed in which a user scores at least a threshold number of goals may be achieved by the combined user progress, and trophy data for the group trophy can be provided to indicate the users that have contributed to the combined user progress (optionally at least a threshold amount) and that the task that was required to achieve the group trophy.

In some embodiments of the disclosure, the data processing apparatus is configured to output trophy data indicative of: a group of users each associated with the indicator data; and a group trophy for specifying at least one target property that has been met or exceeded by the combined user progress.

The data processing apparatus may output the trophy data to various devices for sharing the trophy data. For example, the trophy data may be output to a server associated with a gaming platform for sharing with various users. The trophy data may thus be shared with various users of a gaming platform. In some examples, the trophy data may relate to an achievement for which users can still contribute to even once one or more of the target properties has been met or exceeded (as discussed previously with respect to Figure 5) and by sharing the trophy data other users can be incentivised to join in and attempt to contribute to the group trophy and potentially also be awarded the group trophy either by providing a contribution (such as completing a football match and scoring a certain number of goals) or by providing a contribution that is at least a threshold contribution (such as completing a certain number of football matches and scoring a certain number of goals in each of those matches).

In some embodiments of the disclosure, the data processing apparatus is configured to share the trophy data to one or more social gaming networks for sharing the trophy data with other users not part of the group of users. The trophy data may be shared to one or more servers associated with one or more social gaming networks such as Twitch^{®}, Xbox^{®} Live, Steam^{®}, Discord^{®} and PlayStation^{®} Network. Hence, the trophy data can shared and made available to users associated with various social gaming networks.

In some embodiments of the disclosure, the achievement data specifies one or more target properties to be achieved for a video game set (e.g. a series of games, or games featuring one or more common characters or settings, or games released by the same developer or publisher), in which progress with respect to one or more of the target properties can be achieved through gameplay of any of a plurality of video game titles for that video game set. For example, the achievement data may specify one or more target properties to be achieved for the video game series Call of Duty@ and gameplay with respect to any of the video games of the Call of Duty@ video game series can be used to achieve progress with respect to one or more of the target properties. For example, the achievement data may specify a target property indicating a total number of enemy characters to be killed in the game Call of Duty@ and game session data for any of the released versions of that game set can be used for progression with respect to the target property. Hence in this case, the above mentioned group trophy may be attained in the manner as discussed previously and this group trophy may relate to an achievement with respect to a video game set.

In some embodiments of the disclosure, the achievement data specifies one or more target properties to be achieved for a respective video game title, in which progress with respect to one or more of the target properties can be achieved through gameplay of the respective video game title. For example, the achievement data may specify one or more target properties to be achieved for the video game title Call of Duty@: Black Ops Cold War such that gameplay for that specific video game title is used to achieve progress with respect to one or more of the target properties. Hence in this case, the above mentioned group trophy may be attained in the manner as discussed previously and this group trophy may relate to an achievement with respect to a respective video game title.

In some embodiments of the disclosure, the achievement data specifies one or more target properties to be achieved for a portion of a respective video game. In some cases, a target property may relate to a target for which users can achieve progression towards only for a respective portion of a video game, such as a respective level, portion of a virtual world or time period within the video game. For example, the target property may specify an in-game objective that is to be completed a certain number of times within a specific portion of a virtual world.

In some embodiments of the disclosure, the storage circuitry is configured to store second achievement data specifying one or more second target properties to be achieved for the video game and to store second progress data in association with the achievement data. The above mentioned techniques may be performed for first achievement data and second achievement data which each specify a different target property to be achieved so that a first set of associated users may be created with respect to the first achievement data and a second set of associated users may be created with respect to the second achievement data.

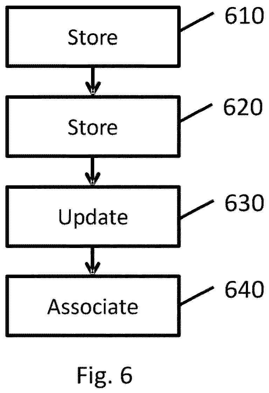

Referring now to Figure 6, in embodiments of the disclosure a computer implemented method comprises:
storing (at a step 610) achievement data specifying one or more target properties to be achieved for a video game;
storing (at a step 620) progress data, the progress data being indicative of a combined user progress with respect to one or more of the target properties and a plurality of individual user progresses, wherein each of the plurality of individual user progresses corresponds to a progress of a respective user and the combined user progress corresponds to a combination of the plurality of individual user progresses;
updating (at a step 630) the progress data in response to game session data for respective game sessions of the video game by respective users; and
in response to the combined user progress being indicative of meeting or exceeding one or more of the target properties, associating (at a step 640) indicator data with at least some of the respective users for which the individual user progress contributes to the combined user progress.

It will be appreciated that example embodiments can be implemented by computer software operating on a general purpose computing system such as a games machine. In these examples, computer software, which when executed by a computer, causes the computer to carry out any of the methods discussed above is considered as an embodiment of the present disclosure. Similarly, embodiments of the disclosure are provided by a non-transitory, machine-readable storage medium which stores such computer software.

Thus any required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

It will also be apparent that numerous modifications and variations of the present disclosure are possible in light of the above teachings. It is therefore to be understood that within the scope of the appended claims, the disclosure may be practised otherwise than as specifically described herein.

## Claims

1. A data processing apparatus comprising:
storage circuitry to store:
achievement data specifying one or more target properties to be achieved for a video game; and
progress data, the progress data being indicative of a combined user progress with respect to one or more of the target properties and a plurality of individual user progresses, wherein each of the plurality of individual user progresses corresponds to a progress of a respective user and the combined user progress corresponds to a combination of the plurality of individual user progresses;
update circuitry to update the progress data in response to game session data for respective game sessions of the video game by respective users; and
control circuitry, wherein in response to the combined user progress being indicative of meeting or exceeding one or more of the target properties, the control circuitry is configured to associate indicator data with at least some of the respective users for which the individual user progress contributes to the combined user progress.

2. The data processing apparatus according to claim 1, wherein the control circuitry is configured to associate the indicator data with a respective user according to whether an individual user progress associated with that respective user provides at least a threshold contribution with respect to the combined user progress.

3. The data processing apparatus according to claim 1 or claim 2, wherein the update circuitry is configured to continue to update the progress data in response to game session data for respective game sessions of the video game by respective users after the combined user progress is indicative of meeting or exceeding one or more of the target properties.

4. The data processing apparatus according to claim 3, wherein the control circuitry is configured to selectively associate the indicator data with a respective user according to whether an individual user progress associated with that respective user provides at least a threshold contribution with respect to the combined user progress.

5. The data processing apparatus according to claim 4, wherein for at least one other respective user that is not associated with the indicator data in response to the combined user progress being indicative of meeting or exceeding one or more of the target properties, the control circuitry is configured to associate the indicator data with the at least one other respective user in response to an individual user progress associated with that respective user subsequently being updated to provide at least the threshold contribution with respect to the combined user progress.

6. The data processing apparatus according to any preceding claim, wherein the control circuitry is configured to associate the indicator data with a plurality of respective users and the indicator data is indicative of an identity of each of the plurality of respective users.

7. The data processing apparatus according to claim 6, wherein the indicator data comprises contribution data indicative of a respective contribution of at least some of the plurality of respective users.

8. The data processing apparatus according to claim 6 or claim 7, wherein the control circuitry is configured to associate the indicator data with a respective user account of each of the plurality of respective users.

9. The data processing apparatus according to any preceding claim, wherein the indicator data associated with each user comprises a link for accessing a same group chat.

10. The data processing apparatus according to any preceding claim, wherein the data processing apparatus is configured to output trophy data indicative of a group of users each associated with the indicator data.

11. The data processing apparatus according to claim 10, wherein the data processing apparatus is configured to share the trophy data to one or more one or more social gaming networks for sharing the trophy with other users not part of the group of users.

12. The data processing apparatus according to any preceding claim, wherein the achievement data specifies one or more target properties to be achieved for one selected from the list consisting of:
a video game set associated with a plurality of respective video game titles;
a respective video game title; and
a portion of the video game.

13. The data processing apparatus according to any preceding claim, wherein the combined user progress comprises at least one cumulative value, and the update circuitry is configured to update the cumulative value in dependence on the plurality of individual user progresses.

14. A computer implemented method comprising:
storing achievement data specifying one or more target properties to be achieved for a video game;
storing progress data, the progress data being indicative of a combined user progress with respect to one or more of the target properties and a plurality of individual user progresses, wherein each of the plurality of individual user progresses corresponds to a progress of a respective user and the combined user progress corresponds to a combination of the plurality of individual user progresses;
updating the progress data in response to game session data for respective game sessions of the video game by respective users; and
in response to the combined user progress being indicative of meeting or exceeding one or more of the target properties, associating indicator data with at least some of the respective users for which the individual user progress contributes to the combined user progress.

15. Computer software which when executed by a computer causes the computer to perform the method according to claim 14.
